# EUROPEAN PATENT SPECIFICATION

(11) **EP 2 900 847 B1**
(45) Date of publication and mention of the grant of the patent: **24.03.2021**
(21) Application number: 13839631.2
(22) Date of filing: 05.08.2013
(51) Int. Cl.: C25B 3/02, C25B 3/04, C25B 9/00, C25B 9/08, C25B 15/08

(54) **ELETROCHEMICAL REDUCTION OF CO2 WITH CO-OXIDATION OF AN ALCOHOL**
ELEKTROCHEMISCHE REDUKTION VON CO2 MIT KOOXIDATION EINES ALKOHOLS
RÉDUCTION ÉLECTROCHIMIQUE DU CO2 AVEC CO-OXYDATION D'UN ALCOOL

(30) Priority: 19.09.2012 US 201261703238 P; 19.09.2012 US 201261703175 P; 19.09.2012 US 201261703232 P; 19.09.2012 US 201261703234 P; 19.09.2012 US 201261703231 P; 19.09.2012 US 201261703158 P; 19.09.2012 US 201261703229 P; 19.09.2012 US 201261703187 P; 31.10.2012 US 201261720670 P; 21.12.2012 US 201213724231
(43) Date of publication of application: 05.08.2015
(73) Proprietor: Avantium Knowledge Centre B.V., 1014 BV Amsterdam (NL)
(72) Inventor: TEAMEY, Kyle, Washington, DC 20016 (US); KACZUR, Jerry, J., North Miami Beach, FL 33160 (US); COLE, Emily, Barton, Houston, TX 77007 (US); MAJSZTRIK, Paul, Cranbury, NJ 08512 (US); SIVASANKAR, Narayanappa, Plainsboro, NJ 08536 (US); BOCARSLY, Andrew, B., Plainsboro, NJ 08526 (US)
(74) Representative: Dijkhuis ev Boon, Anouk Hélène J.
(86) International application number: PCT/US2013/053607
(87) International publication number: WO 2014/046798

(56) References cited:
- WO-A1-2009/145624
- WO-A1-2012/118065
- WO-A2-2014/042781
- US-A1- 2006 269 813
- US-A1- 2008 223 727
- US-A1- 2011 114 502
- US-A1- 2013 140 187

## Description

### TECHNICAL FIELD

The present disclosure generally relates to the field of electrochemical reactions, and more particularly to methods for electrochemical reduction of carbon dioxide with co-oxidation of an alcohol.

### BACKGROUND

The combustion of fossil fuels in activities such as electricity generation, transportation, and manufacturing produces billions of tons of carbon dioxide annually. Research since the 1970s indicates increasing concentrations of carbon dioxide in the atmosphere may be responsible for altering the Earth's climate, changing the pH of the ocean and other potentially damaging effects. Countries around the world, including the United States, are seeking ways to mitigate emissions of carbon dioxide.

A mechanism for mitigating emissions is to convert carbon dioxide into economically valuable materials such as fuels and industrial chemicals. If the carbon dioxide is converted using energy from renewable sources, both mitigation of carbon dioxide emissions and conversion of renewable energy into a chemical form that can be stored for later use will be possible. Example 4 of WO2009/145624 describes electrolysis of ethanol using a Pt anode and producing diethylcarbonate, ethyl acetate and some heavier compounds. US2011/114502 teaches reduction of carbon dioxide at a cathode while the goal of WO2012/118065 was to immobilize carbon dioxide such as by converting carbon dioxide at the cathode into carbon monoxide and formic acid.

### SUMMARY

The present disclosure is directed to a method for producing a first product from a first region of an electrochemical cell having a cathode and a second product from a second region of the electrochemical cell having an anode. The method includes the step of contacting the first region of the electrochemical cell with a catholyte comprising carbon dioxide and optionally an alcohol. Another step of the method includes contacting the second region of the electrochemical cell with an anolyte comprising an alcohol. Further, the method includes a step of applying an electrical potential between the anode and the cathode sufficient to produce a first product recoverable from the first region and a second product recoverable from the second region. The method further includes extracting the first product from the first region and extracting the second product from the second region, wherein the extracted second product is presented through a port for subsequent storage and/or consumption by other devices and/or processes wherein the anode includes an electrocatalytic coating on a valve metal substrate wherein the electrocatalytic coating is selected from the group consisting of ruthenium oxides and iridium oxides, and platinum and gold and their combinations as metals and oxides wherein the valve metal substrate includes titanium, tantalum, zirconium or niobium, and wherein the second product includes at least one of an aldehyde and a carboxylic acid.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

The numerous advantages of the disclosure may be better understood by those skilled in the art by reference to the accompanying figures in which:
FIG. 1A is a block diagram of a system in accordance with an embodiment of the present disclosure;
FIG. 1B is a block diagram of a system in accordance with an embodiment of the present disclosure;
FIG. 2 is a block diagram of a system in accordance with another embodiment of the present disclosure;
FIG. 3 is a block diagram of a system not in accordance with the present invention;
FIG. 4 is a block diagram of a system in accordance with another additional embodiment of the present disclosure;
FIG. 5 is a flow diagram of a method of electrochemical co-production of products in accordance with an embodiment of the present disclosure; and
FIG. 6 is a flow diagram of a method of electrochemical co-production of products in accordance with another embodiment of the present disclosure.

### DETAILED DESCRIPTION

Reference will now be made in detail to the subject matter disclosed, which is illustrated in the accompanying drawings.

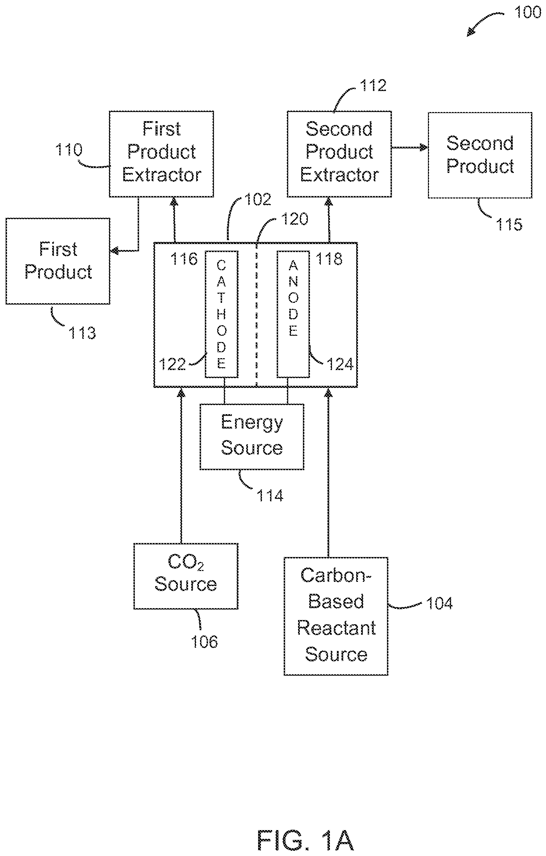

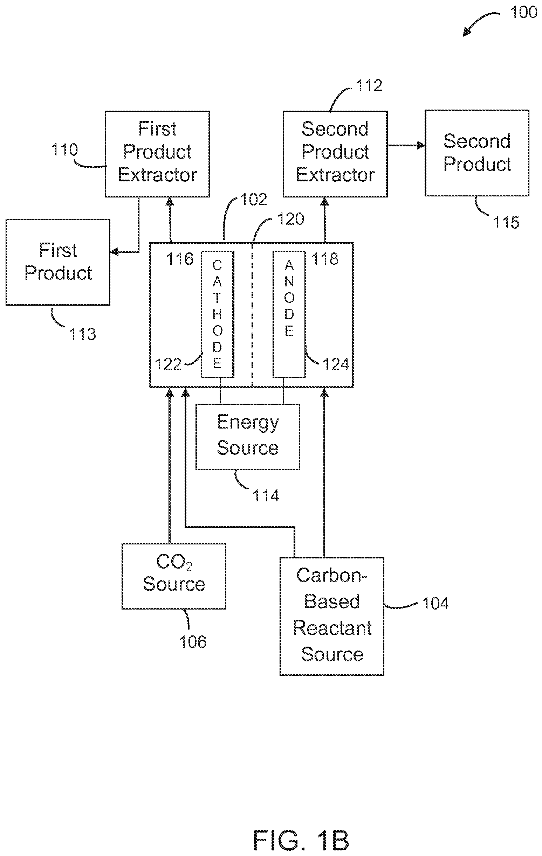

Referring generally to FIGS. 1-6, systems and methods of electrochemical co-production of products with a carbon-based reactant, such as an alcohol, supplied to an anode are disclosed. It is contemplated that the electrochemical co-production of products may include a production of a first product, such as reduction of carbon dioxide to carbon-based products to include one, two, three, and four carbon chemicals, at a cathode side of an electrochemical cell with co-production of a second product, such as an oxidized carbon-based product, at the anode of the electrochemical cell whereby the anolyte includes an alcohol.

Before any embodiments of the disclosure are explained in detail, it is to be understood that the embodiments may not be limited in application according to the details of the structure or the function as set forth in the following descriptions or illustrated in the figures. Different embodiments may be capable of being practiced or carried out in various ways. Also, it is to be understood that the phraseology and terminology used herein is for the purpose of description and should not be regarded as limiting. The use of terms such as "including," "comprising," or "having" and variations thereof herein are generally meant to encompass the item listed thereafter and equivalents thereof as well as additional items. Further, unless otherwise noted, technical terms may be used according to conventional usage.

Referring to FIG. 1A, a block diagram of a system 100 in accordance with an embodiment of the present disclosure is shown. System (or apparatus) 100 generally includes an electrochemical cell (also referred as a container, electrolyzer, or cell) 102, a carbon based reactant source 104, a carbon dioxide source 106, a first product extractor 110 and a first product 113, a second product extractor 112, second product 115, and an energy source 114.

Electrochemical cell 102 may be implemented as a divided cell. The divided cell may be a divided electrochemical cell and/or a divided photoelectrochemical cell. Electrochemical cell 102 may include a first region 116 and a second region 118. First region 116 and second region 118 may refer to a compartment, section, or generally enclosed space, and the like without departing from the scope and intent of the present disclosure. First region 116 may include a cathode 122. Second region 118 may include an anode 124. First region 116 may include a catholyte whereby carbon dioxide is dissolved in the catholyte. A heterocyclic catalyst, such as pyridine, imidazole, lutadines, or bipyridines, may also be in the catholyte. Second region 118 may include an anolyte which may include an alcohol. The anolyte may be free of halide ions. Energy source 114 may generate an electrical potential between the anode 124 and the cathode 122. The electrical potential may be a DC voltage. Energy source 114 may be configured to implement a variable voltage or variable current source. Separator 120 may selectively control a flow of ions between the first region 116 and the second region 118. Separator 120 may include an ion conducting membrane or diaphragm material.

Electrochemical cell 102 is generally operational to reduce carbon dioxide in the first region 116 to a first product 113 recoverable from the first region 116 while producing a second product 115 recoverable from the second region 118. Cathode 122 may reduce the carbon dioxide into a first product 113 that may include one or more compounds. Examples of the first product 113 recoverable from the first region 116 by first product extractor 110 may include carbon monoxide, formic acid, formaldehyde, methanol, oxalate, oxalic acid, glyoxylic acid, glycolic acid, glyoxal, glycolaldehyde, ethylene glycol, acetic acid, acetaldehyde, ethanol, ethylene, methane, ethane, lactic acid, propanoic acid, acetone, isopropanol, 1-propanol, 1,2-propylene glycol, propane, 1-butanol, and 2-butanol.

Carbon dioxide source 106 may provide carbon dioxide to the first region 116 of electrochemical cell 102. In some embodiments, the carbon dioxide is introduced directly into the region 116 containing the cathode 122.

First product extractor 110 may implement an organic product and/or inorganic product extractor. First product extractor 110 is generally operational to extract (separate) the first product 113 from the first region 116. The extracted first product 113 may be presented through a port of the system 100 for subsequent storage and/or consumption by other devices and/or processes.

Second product extractor 112 may extract the second product 115 from the second region 118. The extracted second product 115 may be presented through a port of the system 100 for subsequent storage and/or consumption by other devices and/or processes.

The carboxylic acid may include formic acid, acetic acid, propanoic acid, butanoic acid, or acrylic acid. Examples of the second product 115 recoverable from the second region 118 and the carbon- based reactant supplied to the second region 118 are in the table below.

**TABLE 1**

| **Chemical Feed to Anode** | **Oxidation Product(s)** |
|---|---|
| Methanol | Formaldehyde, Formic Acid |
| Ethanol | Acetaldehyde, Acetic Acid |
| Ethylene Glycol | Glycolaldehyde, Glyoxal, Glycolic Acid, Glyoxylic Acid, Oxalic Acid |
| Glycerol | Glyceraldehyde, dihydroxyacetone, 2,3 Dihydroxypropionic acid |
| Polyols | Polyol-aldehydes, Polyol-ketones, Polyol-carboxylic acids |
| 1-Propanol | Propionaldehyde, Propanoic Acid |
| 1-Butanol | Butyraldehyde, Butanoic Acid |
| Phenol | Hydroquinone 1-2 dihydrobenzene (Catechol). 2,5 Cyclohexadiene-1-one Benzoquinone, Maleic Acid, Oxalic Acid |
| Benzyl Alcohol | Benzaldehyde, Benzoic Acid |
| Allyl Alcohol | Acrolein, Acrylic Acid |

In one embodiment shown in FIG. 1B, the cathode side of the reaction occurring in the first region 116 may also receive a feed of the alcohol. In this embodiment, the alcohol is supplied to the first region 116 in addition to the carbon dioxide source 106. The alcohol may act as a solvent for the carbon dioxide in the first region 116 and the alcohol and carbon dioxide source 106 may be supplied in a solution.

A glycol or diol or polyol may also serve as a solvent and reactant in the cell. For instance, ethylene glycol or glycerol might be a solvent in the electrochemical cell and cathode reactions involving the reduction of carbon dioxide or other carbon-based compounds would take place in the ethylene glycol or glycerol. At the anode, ethylene glycol would be oxidized to a product or products such as glyoxal or glyoxylic acid, and glycerol would be oxidized to a product or products such as glyceraldehyde, glyceric acid, glycolic acid, dihydroxyacetone, or 2, 3 dihydroxypropionic acid. Other polyols could be used and would be oxidized to corresponding, polyol-aldehydes, polyol-ketones, and polyol-carboxylic acids.

Through the co-production of a first product 113 and a second product 115, the overall energy requirement for making each of the first product 113 and second product 115 may be reduced by 50% or more. In addition, electrochemical cell 102 may be capable of simultaneously producing two or more products with high selectivity.

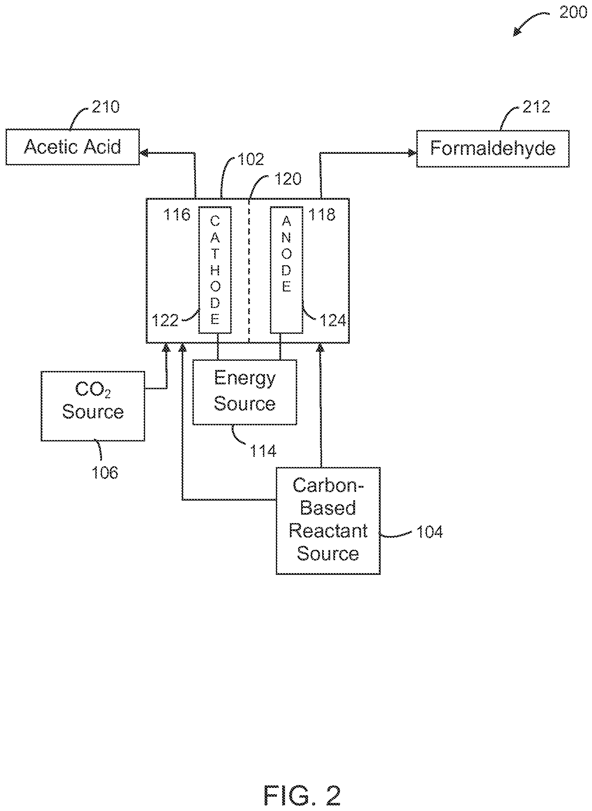

A preferred embodiment of the present disclosure is the use of a methanol feed to both the anode and the cathode to make organic chemicals such as acetic acid at the cathode while simultaneously making formaldehyde at the anode. Referring to FIG. 2, system 200 for co-production of acetic acid 210 and formaldehyde 212 is shown. The oxidation of alcohol, such as methanol 220 in the second region 118 produces protons and electrons that are utilized to reduce carbon dioxide in the first region 116. The hydrogen resulting from the oxidation reaction at the second region 118 may be reacted with the carbon dioxide and the methanol provided by alcohol source 104 to the first region 116 to selectively produce acetate or acetic acid 210.

Formaldehyde 212 is produced at the second region 118 from CO₂ and the methanol provided by alcohol source 104. The alcohol source 104 is thus used both in the oxidation of the second product (formaldehyde 212) and in the transfer of hydrogen from the carbon-based reactant to the first region 116 for CO₂ reduction. The alcohol may serve as the primary hydrogen source for CO₂ reduction. Both the first region 116 and the second region 118 may utilize the methanol provided by alcohol source 104 as part of the catholyte or anolyte.

In one embodiment of the disclosure, when the first product is acetic acid 210 and the second product is formaldehyde 212 from methanol provided by alcohol source 104, then the molar ratio of the products may be 1 acetic acid: 4 formaldehyde because acetic acid production from CO₂ is an 8 electron process and formaldehyde production from methanol is a two electron process. Specifically, the anode reaction is:

4 CH₃OH => 4 CH₂O + 8 H⁺ + 8 e⁻

In the anode reaction, methanol is provided by alcohol source 104 and the methanol is oxidized to formaldehyde, and 2 hydrogen ions are formed which pass through the separator/membrane separating the first region 116 from the second region 118.

The cathode reaction is the formation of acetate or acetic acid as follows:

2 CO₂ + 8 H⁺ + 8 e⁻ => CH₃COO⁻ + H⁺ + 2 H₂O

In the cathode reaction, hydrogen ions from the second region 118 pass through the membrane to the first region 116 to react with carbon dioxide to form acetic acid or acetate.

The combined reaction of methanol with carbon dioxide to form formaldehyde and acetic acid of the embodiment of the system shown in FIG. 2 is:

4 CH₃OH + 2 CO₂ => 4 CH₂O + CH₃COO + H⁺ + 2 H₂O

The combined reaction for the production of formaldehyde from methanol oxidation may be controlled through selection of the anode material, anode material morphology, half-cell potential, the flow rate, and the concentration of water in the methanol feed, as well as other factors.

The concentration of the formaldehyde product leaving the second region may be from 1 to 50% by weight in one embodiment, and more preferably 10 to 40% by weight. The methanol concentration may determine the anolyte conductivity, and should be sufficient in concentration to maintain low voltages in the second region. Preferably, the concentration ranges from 1 to 100% and more preferably from 5 to 90%.

While system 200 of FIG. 2 is shown with a reactant of methanol, it is contemplated that other types of alcohols may be supplied by alcohol source 104 to produce various types of products (first product and second product) as desired and shown in an exemplary fashion in Table 1. It is further contemplated that other types of products may be co-produced by the anode and cathode of an electrochemical cell without departing from the scope and intent of the present disclosure.

Reactions occurring at the first region 116 may occur in a catholyte which may include water, methanol, ethanol, acetonitrile, propylene carbonate, ethylene carbonate, dimethyl carbonate, diethyl carbonate, dimethylsulfoxide, dimethylformamide, acetonitrile, acetone, tetrahydrofuran, N,N-dimethylacetaminde, dimethoxyethane, diethylene glycol dimethyl ester, butyrolnitrile, 1,2-difluorobenzene, γ-butyrolactone, N-methyl-2-pyrrolidone, sulfolane, 1,4-dioxane, nitrobenzene, nitromethane, acetic anhydride, ionic liquids, or other catholytes in which CO₂ is soluble. The alcohol source 104 and carbon dioxide source 106 may be configured to supply the carbon-based reactant and carbon dioxide separately or jointly. The alcohol source 104 and carbon dioxide source 106 may be supplied in a solution. The carbon-based reactant source 104 and carbon dioxide source 106 may also be configured to supply the alcohol and carbon dioxide in solution with the catholyte.

The reactions occurring at the second region 118 may be in a gas phase, for instance in the case of gas phase reactants such as methane. The reaction at the second region 118 may also occur in liquid phase.

A catalyst may be employed in the second region 118 to promote the reaction. For example, a metal or metal oxide catalyst may be incorporated into the anode 124 in order to decrease the anode 124 potential and/or increase anode 124 current density, in addition to improving the selectivity of the oxidation reaction to the products desired. Examples of catalysts may include the metal and metal oxides of transition metals and their alloys and mixtures, including those of W, Mo, V, Fe, Ru, Ir, Au, and Pt. These catalysts may be deposited on the anode structure surfaces and/or on separate supports located in the second region on inorganic or carbon based supports. In addition, the catalyst may also consist of other forms or compositions suitable for the oxidation of the alcohols such as boron-doped diamond films deposited on conductive metal or inorganic supports.

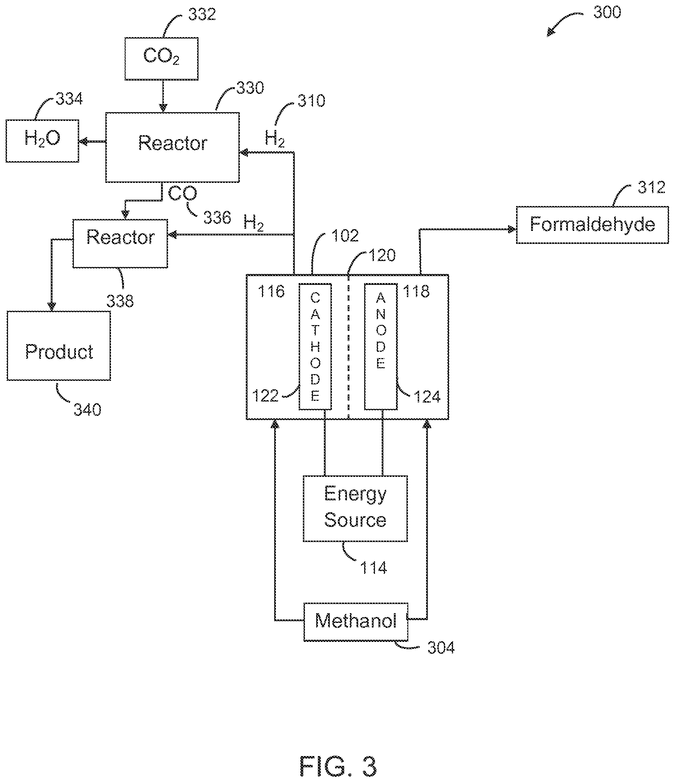

Referring to specifically to FIG. 3, not in accordance with the present invention, first region 116 may produce a first product of H₂ 310 which is combined with carbon dioxide 332 in a reactor 330 which may perform a reverse water gas shift reaction. This reverse water gas shift reaction performed by reactor 330 may produce water 334 and carbon monoxide 336. Carbon monoxide 336 along with H₂ 310 may be combined at reactor 338. Reactor 338 may cause a reaction, such as a Fischer-Tropsch synthesis, to reduce carbon monoxide to a product 340. Product 340 may include methane, methanol, hydrocarbons, glycols. Reactor 338 may also include transition metals such as iron, cobalt, and ruthenium as well as other transition metal oxides as catalysts, on inorganic support structures that may promote the reaction of CO with hydrogen at lower temperatures and pressures.

Second region 118 may co-produce formaldehyde 312 from methanol 304 reactant. It is contemplated that methanol 304 may include methanol or any other alcohol such as ethanol, 2-propanol, phenol, 1-propanol, 1-butanol, 2-butanol, isopropanol, benzyl alcohol, and allyl alcohol without departing from the scope or intent of the present disclosure. Formaldehyde 312 may also refer to any type of aldehyde or a carboxylic acid, including for example formic acid, acetaldehyde, acetic acid, 2-propanone (acetone), hydroquinone, 1-2 dihydrobenzene (catechol), 2,5 cyclohexadiene-1-one, benzoquinone, maleic acid, oxalic acid, propionaldehyde, propanoic acid, butyraldehyde, butanoic acid, butanone, acetone, benzaldehyde, benzoic acid, acrolein, and acrylic acid, without departing from the scope or intent of the present disclosure.

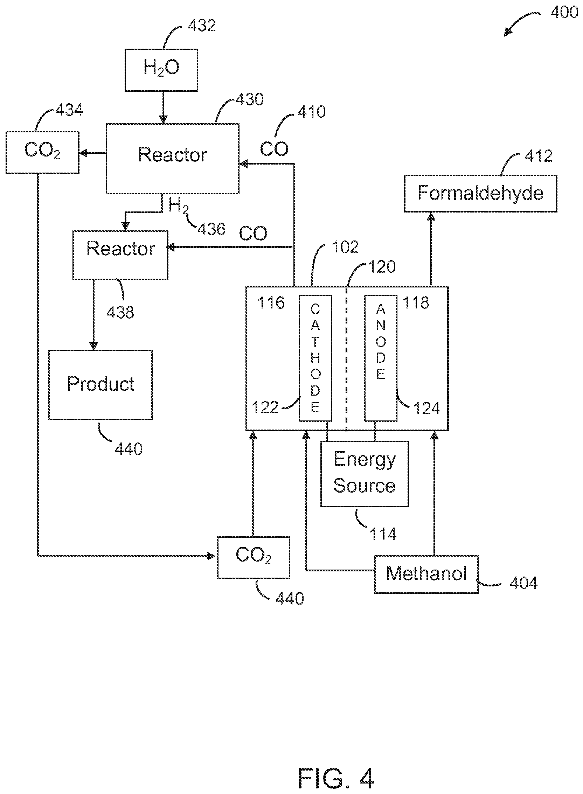

Referring to FIG. 4, first region 116 may produce a first product of carbon monoxide 410 which is combined with water 432 in a reactor 430 which may perform a water gas shift reaction. The water gas shift reaction performed by reactor 430 may produce carbon dioxide 434 and H₂ 436. Carbon monoxide 410 and H₂ 436 may be combined at reactor 438. Reactor 438 may cause a reaction, such as a Fischer-Tropsch synthesis, to reduce carbon monoxide to methane, methanol, hydrocarbons, glycols, olefins by utilizing H₂ 436. Carbon dioxide 434 may be a byproduct of water gas shift reaction of reactor 430 and may be recycled as an input feed to the first region 116. Reactor 438 may also include transition metals such as iron, cobalt, and ruthenium as well as other transition metal oxides as catalysts, on inorganic support structures that may promote the reaction of CO with hydrogen at lower temperatures and pressures.

Second region 118 may co-produce formaldehyde 412 from methanol 404 reactant. It is contemplated that methanol 404 may include methanol or another alcohol such as ethanol, 2-propanol, phenol, 1-propanol, 1-butanol, 2-butanol, isopropanol, benzyl alcohol, and allyl alcohol without departing from the scope or intent of the present disclosure. Formaldehyde 412 may also refer to any type of aldehyde or a carboxylic acid, including for example formic acid, acetaldehyde, acetic acid, 2-propanone (acetone), hydroquinone, 1-2 dihydrobenzene (catechol), 2,5 cyclohexadiene-1-one, benzoquinone, maleic acid, oxalic acid, propionaldehyde, propanoic acid, butyraldehyde, butanoic acid, butanone, acetone, benzaldehyde, benzoic acid, acrolein, and acrylic acid, without departing from the scope or intent of the present disclosure.

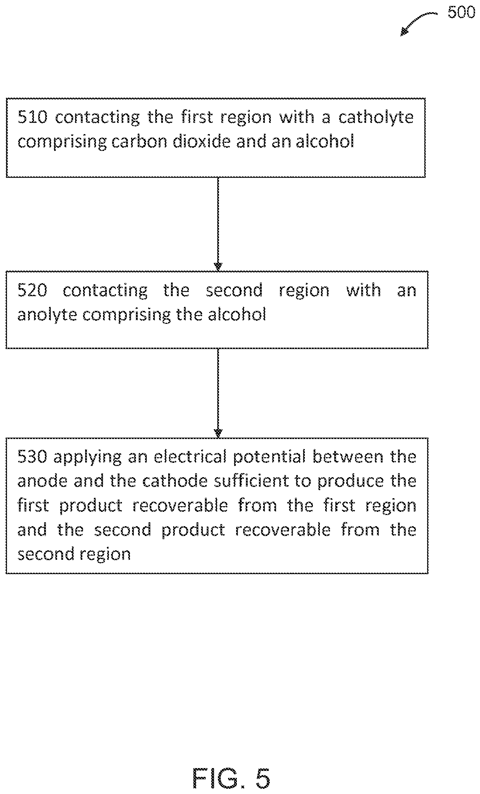

Referring to FIG. 5 a flow diagram of a method 500 of electrochemical co-production of products in accordance with an embodiment of the present disclosure is shown. It is contemplated that method 500 may be performed by system 100 and system 200 as shown in FIGS. 1A, 1B, and 2. Method 500 may include producing a first product from a first region of an electrochemical cell having a cathode and a second product from a second region of the electrochemical cell having an anode.

Method 500 of electrochemical co-production of products may include a step of contacting the first region with a catholyte comprising carbon dioxide and an alcohol 510. Next, method 500 may include the step of contacting the second region with an anolyte comprising alcohol 520. The method 500 may further include the step of applying an electrical potential between the anode and the cathode sufficient to produce the first product recoverable from the first region and the second product recoverable from the second region. Advantageously, a first product produced at the first region may be recoverable from the first region and a second product produced at the second region may be recoverable from the second region.

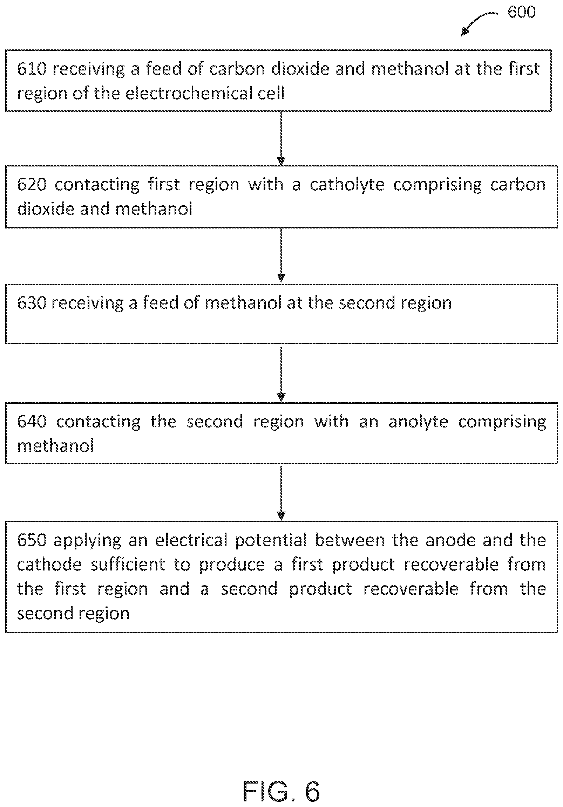

Referring to FIG. 6 a flow diagram of a method 600 of electrochemical co-production of products in accordance with an embodiment of the present disclosure is shown. It is contemplated that method 600 may be performed by system 100 and system 200 as shown in FIGS. 1A, 1B, and 2. Method 600 may include steps for producing a first product from a first region of an electrochemical cell having a cathode and a second product from a second region of the electrochemical cell having an anode.

Method 600 may include the step of receiving a feed of carbon dioxide and methanol at the first region of the electrochemical cell 610. A further step of method 600 may include contacting the first region with a catholyte comprising carbon dioxide and methanol 620. The method 600 also includes the step of receiving a feed of methanol at the second region of the electrochemical cell 630 and contacting the second region with an anolyte comprising methanol 610. The method also includes the step of applying an electrical potential between the anode and the cathode sufficient to produce the first product recoverable from the first region and the second product recoverable from the second region 650.

It is contemplated that receiving a feed may include various mechanisms for receiving a supply of a reactant, whether in a continuous, near continuous or batch portions. Similarly, the reactant (such as the alcohol or carbon dioxide) may be jointly fed with additional reactants, the anolyte or catholyte, or may be fed separately into either the first region or second region.

It is further contemplated that the structure and operation of the electrochemical cell may be adjusted to provide desired results. For example, the electrochemical cell may operate at higher pressures, such as pressures above atmospheric pressure which may increase current efficiency and allow for operation of the electrochemical cell at higher current densities.

The first product and the second product may be mixed with other products. For example, the second product may include a methanol/formaldehyde mixture, or a methanol/carboxylic acid mixture. These mixtures may be separated outside of the electrochemical cell using conventional separation techniques, including distillation and esterification.

In one embodiment, the Faradaic current efficiency of the anode could be between 90 to 100%, and the acetate Faradaic current efficiency could be between 25 and 100%. The flow circulation of the anolyte and catholyte is such that it provides sufficient flow for the reactions. The flow rate may be varied to select for the production of different products, such as formaldehyde instead of formic acid, CO, and CO₂ from methanol oxidation.

Additionally, the cathode and anode may comprise a high surface area with a void volume which may range from 30% to 98%. The surface area may be from 2 cm²/cm³ to 500 cm²/cm³ or higher. It is contemplated that surface areas also may be defined as a total area in comparison to the current distributor/conductor back plate, with a preferred range of 2x to 1000x or more.

The anode may comprise a polymeric bound carbon current distributor anode employing a carbon felt with a specific surface area of 50 cm²/cm³ or more that fills the gap between a cathode backplate and the membrane, resulting in a zero gap anode.

The cathode may comprise a number of high surface area materials to include copper, stainless steels, carbon, and silicon, which may be further coated with a layer of material which may be a conductive metal or semiconductor. A very thin plastic screen may be incorporated against the cathode side of the membrane to prevent the membrane from touching the high surface area cathode structure. The high surface area cathode structure may be mechanically pressed against the cathode current distributor backplate, which may be composed of material that has the same surface composition as the high surface area cathode. For electrochemical reductions, the cathode electrode may be a suitable conductive electrode, such as Al, Au, Ag, Bi, C, Cd, Co, Cr, Cu, Cu alloys (e.g., brass and bronze), Ga, Hg, In, Mo, Nb, Ni, NiCo₂O₄, Ni alloys (e.g., Ni 625, NiHX), Ni-Fe alloys, Pb, Pd alloys (e.g., PdAg), Pt, Pt alloys (e.g., PtRh), Rh, Sn, Sn alloys (e.g., SnAg, SnPb, SnSb), Ti, V, W, Zn, stainless steel (SS) (e.g., SS 2205, SS 304, SS 316, SS 321), austenitic steel, ferritic steel, duplex steel, martensitic steel, Nichrome (e.g., NiCr 60:16 (with Fe)), elgiloy (e.g., Co-Ni-Cr), degenerately doped n-Si, degenerately doped n-Si:As, degenerately doped n-Si:B, degenerately doped n-Si, degenerately doped n-Si:As, and degenerately doped n-Si:B. Other conductive electrodes may be implemented to meet the criteria of a particular application. For photoelectrochemical reductions, the electrode may be a p-type semiconductor, such as p-GaAs, p-GaP, p-InN, p-InP, p-CdTe, p-GaInP₂ and p-Si, or an n-type semiconductor, such as n-GaAs, n-GaP, n-InN, n-InP, n-CdTe, n-GaInP₂ and n-Si. Other semiconductor electrodes may be implemented to meet the criteria of a particular application including, but not limited to, CoS, MoS₂, TiB, WS₂, SnS, Ag₂S, CoP₂, Fe₃P, Mn₃P₂, MoP, Ni₂Si, MoSi₂, WSi₂, CoSi₂, Ti₄O₇, SnO₂, GaAs, GaSb, Ge, and CdSe.

Catholyte may include a pH range from 1 to 12, and more specifically from 4 to 10. The pH may be a function of the desired product and whether any catalysts are utilized in operation of the electrochemical cell. Preferably, catholyte and catalysts may be selected to prevent corrosion at the electrochemical cell. Catholyte may include homogeneous catalysts such as pyridine, 2-picoline, and the like. Catholyte electrolytes may include alkali metal bicarbonates, carbonates, sulfates, phosphates, borates, and hydroxides. Non-aqueous solvents, such as propylene carbonate, methanesulfonic acid, methanol, and other ionic conducting liquids may be used rather than water. The electrolyte may comprise one or more of Na₂SO₄, KCl, NaNO₃, NaCl, NaF, NaClO₄, KClO₄, K₂SiO₃, CaCl₂, a guanidinium cation, a H cation, an alkali metal cation, an ammonium cation, an alkylammonium cation, a tetraalkyl ammonium cation, a halide anion, an alkyl amine, a borate, a carbonate, a guanidinium derivative, a nitrite, a nitrate, a phosphate, a polyphosphate, a perchlorate, a silicate, a sulfate, and a hydroxide.

The catholyte may comprise a homogeneous catalyst. Homogeneous catalysts comprising aromatic heterocyclic amines may include, but are not limited to, unsubstituted and substituted pyridines and imidazoles. Substituted pyridines and imidazoles may include, but are not limited to mono and disubstituted pyridines and imidazoles. For example, suitable catalysts may include straight chain or branched chain lower alkyl (e.g., C₁-C₁₀) mono and disubstituted compounds such as 2-methylpyridine, 4-tertbutyl pyridine, 2,6 dimethylpyridine (2,6-lutidine); bipyridines, such as 4,4'-bipyridine; amino-substituted pyridines, such as 4- dimethylamino pyridine; and hydroxyl-substituted pyridines (e.g., 4-hydroxy-pyridine) and substituted or unsubstituted quinoline or isoquinolines. The catalysts may also suitably substituted or unsubstituted dinitrogen heterocyclic amines, such as pyrazine, pyridazine and pyrimidine. Other catalysts generally include azoles, imidazoles, indoles, oxazoles, thiazoles, substituted species and complex multi-ring amines such as adenine, pterin, pteridine, benzimidazole, phenonthroline and the like.

In one embodiment, a catholyte/anolyte flow rate may include a catholyte/anolyte cross sectional area flow rate range such as 2 - 3,000 gpm/ft² or more (0.0076 - 11.36 m³/m²). A flow velocity range may be 0.002 to 20 ft/sec ( 0.0006 to 6.1 m/sec). Operation of the electrochemical cell catholyte at a higher operating pressure allows more dissolved carbon dioxide to dissolve in the aqueous solution. Typically, electrochemical cells can operate at pressures up to about 20 to 30 psig in multi-cell stack designs, although with modifications, the electrochemical cells may operate at up to 100 psig. The electrochemical cell may operate anolyte at the same pressure range to minimize the pressure differential on a separator or membrane separating the cathode and the anode. Special electrochemical designs may be employed to operate electrochemical units at higher operating pressures up to about 60 to 100 atmospheres or greater, which is in the liquid CO₂ and supercritical CO₂ operating range.

The catholyte may be operated at a temperature range of -10 to 95 °C, more preferably 5 - 60°C. The lower temperature will be limited by the catholytes used and their freezing points. In general, the lower the temperature, the higher the solubility of CO₂ in the aqueous solution phase of the catholyte, and would help in obtaining higher conversion and current efficiencies. The drawback is that the operating electrochemical cell voltages may be higher, so there is an optimization that would be done to produce the chemicals at the lowest operating cost. In addition, the catholyte may require cooling, so an external heat exchanger may be employed, flowing the catholyte through the heat exchanger and using cooling water to remove the heat and control the catholyte temperature.

The anolyte operating temperatures may be in the same ranges as the ranges for the catholyte, and may be in a range of 0°C to 95°C. In addition, the anolyte may require cooling, so an external heat exchanger may be employed, flowing the anolyte through the heat exchanger and using cooling water to remove the heat and control the anolyte temperature.

Electrochemical cells may include various types of designs. These designs may include Zero Gap, flow-through with a recirculating catholyte electrolyte with various high surface area cathode materials. The electrochemical cell may include flooded co-current packed and trickle bed designs with the various high surface area cathode materials. Also, bipolar stack cell designs and high pressure cell designs may also be employed for the electrochemical cells.

Anodes include an electrocatalytic coating on a valve metal substrate, wherein the electrocatalytic coating is selected from the group consisting of ruthenium oxides and iridium oxides, and platinum and gold and their combinations as metals and oxides, wherein the valve metal substrate includes titanium, tantalum, zirconium or niobium. High surface area anode structures that may be used which would help promote the reactions at the anode surfaces. The high surface area anode base material may be in a reticulated form composed of fibers, sintered powder, sintered screens, and the like, and may be sintered, welded, or mechanically connected to a current distributor back plate that is commonly used in bipolar cell assemblies. In addition, the high surface area reticulated anode structure may also contain areas where additional applied catalysts on and near the electrocatalytic active surfaces of the anode surface structure to enhance and promote reactions that may occur in the bulk solution away from the anode surface such as the reaction between bromine and the carbon based reactant being introduced into the anolyte. The anode structure may be gradated, so that the density of the may vary in the vertical or horizontal direction to allow the easier escape of gases from the anode structure. In this gradation, there may be a distribution of particles of materials mixed in the anode structure that may contain catalysts for the bulk reaction of the carbon based reactant.

The separator, also referred as a membrane, between the cathode and the anode, may include cation ion exchange type membranes. Cation ion exchange membranes which have an high rejection efficiency to anions may be preferred. Examples of such cation ion exchange membranes may include perfluorinated sulfonic acid based ion exchange membranes such as DuPont Nafion brand unreinforced types N117 and N120 series, more preferred PTFE fiber reinforced N324 and N424 types, and similar related membranes manufactured by Japanese companies under the supplier trade names such as AGC Engineering (Asahi Glass) under their trade name Flemion®. Other multi-layer perfluorinated ion exchange membranes used in the chlor alkali industry may have a bilayer construction of a sulfonic acid based membrane layer bonded to a carboxylic acid based membrane layer, which efficiently operates with an anolyte and catholyte above a pH of about 2 or higher. These membranes may have an higher anion rejection efficiency. These are sold by DuPont under their Nafion® trademark as the N900 series, such as the N90209, N966, N982, and the 2000 series, such as the N2010, N2020, and N2030 and all of their types and subtypes. Hydrocarbon based membranes, which are made from of various cation ion exchange materials can also be used if the anion rejection is not as desirable, such as those sold by Sybron under their trade name Ionac®, Engineering (Asahi Glass) under their trade name Selemion®, and Tokuyama Soda, among others on the market. Ceramic based membranes may also be employed, including those that are called under the general name of NASICON (for sodium super-ionic conductors) which are chemically stable over a wide pH range for various chemicals and selectively transports sodium ions, the composition is Na₁+ₓZr₂SiₓP₃-xO₁₂, and well as other ceramic based conductive membranes based on titanium oxides, zirconium oxides and yttrium oxides, and beta aluminum oxides. Alternative membranes that may be used are those with different structural backbones such as polyphosphazene and sulfonated polyphosphazene membranes in addition to crown ether based membranes. Preferably, the membrane or separator is chemically resistant to the anolyte and catholyte. Preferably, the membrane or separator is chemically resistant to the anolyte and catholyte and operates at temperatures of less than 600 degrees C, and more preferably less than 500 degrees C.

A catholyte or an anolyte may comprise an aqueous solvent, a non-aqueous solvent, or a mixture of solvents containing one or more of water as well as protic or aprotic polar solvents such as methanol, ethanol, acetonitrile, propylene carbonate, ethylene carbonate, dimethyl carbonate, diethyl carbonate, dimethylsulfoxide, dimethylformamide, acetonitrile, acetone, tetrahydrofuran, N,N-dimethylacetaminde, dimethoxyethane, diethylene glycol dimethyl ester, butyrolnitrile, 1,2-difluorobenzene, γ-butyrolactone, N-methyl-2-pyrrolidone, sulfolane, 1,4-dioxane, nitrobenzene, nitromethane, acetic anhydride, and ionic liquids. An aqueous solvent comprises at least 5% water. A non-aqueous solvent comprises less than 5% water.

The rate of the generation of the second product formed in the second region from the anode reaction, such as the oxidation of methanol to formaldehyde, is contemplated to be proportional to the applied Faradaic current to the electrochemical cell. The rate of the input or feed of the carbon based reactant into the second region should then be fed in proportion to the applied Faradaic current or amperage rate to the electrochemical cell. The anode reaction efficiency would determine the maximum theoretical formation in moles of the alcohol oxidation product at the applied current. It is contemplated that the molar ratio of alcohol feed to the theoretical moles of potentially formed alcohol oxidation product would be in a range of 500:1 to 2:1, and preferably in the range of 200:1 to 10:1, where the alcohol is in excess of the theoretical required for the anode reaction. In this contemplated mode of operation, there is an excess of alcohol in the anolyte during operation. The operation of an extractor and its selected separation method-for example fractional distillation--the actual products produced, and the selectivity of the wanted reaction would determine the optimum molar ratio of the carbon based reactant to the applied Faradaic current rate applied in the second region. Any of the unreacted components could be recycled to the second region.

Similarly, the rate of the generation of the formed electrochemical carbon dioxide reduction product in the first (catholyte) compartment, such as CO, is contemplated to be proportional to the applied current to the electrochemical cell. The rate of the input or feed of the carbon dioxide source into the first compartment should be fed in a proportion to the applied current. The cathode reaction efficiency would determine the maximum theoretical formation in moles of the carbon dioxide reduction product at the applied current. It is contemplated that the ratio of carbon dioxide feed to the theoretical moles of potentially formed carbon dioxide reduction product based on the applied current, would be in a range of 100:1 to 2:1, and preferably in the range of 50:1 to 5:1, where the carbon dioxide is in excess of the theoretical required for the cathode reaction. The carbon dioxide excess would then be separated in the extractor and recycled back to the second compartment.

In the present disclosure, the methods disclosed may be implemented as sets of instructions or software readable by a device. Further, it is understood that the specific order or hierarchy of steps in the methods disclosed are examples of exemplary approaches. Based upon design preferences, it is understood that the specific order or hierarchy of steps in the method can be rearranged while remaining within the disclosed subject matter. The accompanying method claims present elements of the various steps in a sample order, and are not necessarily meant to be limited to the specific order or hierarchy presented.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

## Claims

1. A method for producing a first product from a first region of an electrochemical cell having a cathode and a second product from a second region of the electrochemical cell having an anode, the method comprising the steps of:
- contacting the first region with a catholyte comprising carbon dioxide;
- contacting the second region with an acid anolyte, the anolyte comprising an alcohol;
- applying an electrical potential between the anode and the cathode sufficient to produce the first product recoverable from the first region and the second product recoverable from the second region; and
- extracting the first product from the first region and extracting the second product from the second region, wherein the extracted second product is presented through a port for subsequent storage and/or consumption by other devices and/or processes,
wherein the anode includes an electrocatalytic coating on a valve metal substrate,
wherein the electrocatalytic coating is selected from the group consisting of ruthenium oxides and iridium oxides, and platinum and gold and their combinations as metals and oxides,
wherein the valve metal substrate includes titanium, tantalum, zirconium or niobium, and
wherein the second product includes at least one of an aldehyde and a carboxylic acid.

2. The method according to claim 1, wherein the cathode comprises bismuth.

3. The method according to claim 1, wherein the anolyte is free of halide ions.

4. The method according to claim 1, wherein the alcohol includes at least one of methanol, ethanol, ethylene glycol, glycerol, 1-propanol, 2-propanol, phenol, 1-butanol, 2-butanol, isopropanol, benzyl alcohol, allyl alcohol, a glycol, and a polyol.

5. The method according to claim 1, wherein the second product includes at least one of formaldehyde, formic acid, acetaldehyde, acetic acid, glycolaldehyde, glyoxal, glycolic acid glyoxylic acid, oxalic acid, glyceraldehyde, dihydroxyacetone, 2,3 dihydroxypropionic acid, polyol-aldehyde, polyol-ketone, polyol-carboxylic acid, acetone, propionaldehyde, propanoic acid, butyraldehyde, butanoic acid, butanone, hydroquinone, 1,2-dihydroxybenzene, 2,5-cyclohexadiene-1-one, benzoquinone, maleic acid, benzaldehyde, benzoic acid, acrolein, and acrylic acid.

6. The method according to claim 1, wherein the first product includes at least one of carbon monoxide, formic acid, formaldehyde, methanol, oxalate, oxalic acid, glyoxylic acid, glycolic acid, glyoxal, glycolaldehyde, ethylene glycol, acetic acid, acetaldehyde, ethanol, ethylene, methane, ethane, lactic acid, propanoic acid, acetone, isopropanol, 1-propanol, 1,2-propylene glycol, propane, 1-butanol, and 2-butanol.

7. The method according to claim 1, wherein the cathode and the anode are separated by an ion permeable barrier.

8. The method according to claim 7, wherein the ion permeable barrier includes one of a polymeric or inorganic ceramic-based ion permeable barrier.

9. The method according to claim 7, wherein the ion permeable barrier includes at least one of:
- a solid polymer conductor electrolyte material and perfluorinated sulfonic acid based membrane,
- a sodium super-conducting ionic conductor type ceramic, or zirconium-yttria and beta-alumina based ceramics.

10. The method according to claim 1, 3 and 5-9 comprising:
- receiving a feed of carbon dioxide and methanol at the first region of the electrochemical cell;
- contacting the first region with a catholyte comprising carbon dioxide and methanol;
- receiving a feed of methanol at the second region of the electrochemical cell; and
contacting the second region with an anolyte comprising methanol.

## Patentansprüche

1. Verfahren zum Erzeugen eines ersten Erzeugnisses aus einem ersten Bereich einer elektrochemischen Zelle, die eine Kathode aufweist, und eines zweiten Erzeugnisses aus einem zweiten Bereich der elektrochemischen Zelle, die eine Anode aufweist, wobei das Verfahren die folgenden Schritte umfasst:
- Inberührungbringen des ersten Bereichs mit einem Katholyten, der Kohlendioxid umfasst;
- Inberührungbringen des zweiten Bereichs mit einem Säureanolyten, wobei der Anolyt einen Alkohol umfasst;
- Anlegen eines elektrischen Potentials zwischen der Anode und der Kathode, das ausreicht, um das erste Erzeugnis, das aus dem ersten Bereich rückgewinnbar ist, und das zweite Erzeugnis, das aus dem zweiten Bereich rückgewinnbar ist, zu erzeugen; und
- Extrahieren des ersten Erzeugnisses aus dem ersten Bereich und Extrahieren des zweiten Erzeugnisses aus dem zweiten Bereich, wobei das extrahierte zweite Erzeugnis durch einen Anschluss für eine nachfolgende Speicherung und/oder einen Verbrauch durch andere Vorrichtungen und/oder Vorgänge dargestellt wird,
wobei die Anode eine elektrokatalytische Beschichtung auf einem Ventilmetallsubstrat beinhaltet,
wobei die elektrokatalytische Beschichtung aus der Gruppe ausgewählt ist, die aus Rutheniumoxiden und Iridiumoxiden und Platin und Gold und deren Kombinationen als Metalle und Oxide besteht,
wobei das Ventilmetallsubstrat Titan, Tantal, Zirkonium oder Niob beinhaltet, und
wobei das zweite Erzeugnis einen Aldehyd und/oder eine Carbonsäure beinhaltet.

2. Verfahren nach Anspruch 1, wobei die Kathode Bismut umfasst.

3. Verfahren nach Anspruch 1, wobei der Anolyt frei von Halogenidionen ist.

4. Verfahren nach Anspruch 1, wobei der Alkohol Methanol, Ethanol, Ethylenglykol, Glycerin, 1-Propanol, 2-Propanol, Phenol, 1-Butanol, 2-Butanol, Isopropanol, Benzylalkohol, Allylalkohol, ein Glykol und/oder ein Polyol beinhaltet.

5. Verfahren nach Anspruch 1, wobei das zweite Erzeugnis Formaldehyd, Ameisensäure, Acetaldehyd, Essigsäure, Glykolaldehyd, Glyoxal, Glykolsäure, Glyoxylsäure, Oxalsäure, Glyceraldehyd, Dihydroxyaceton, 2,3-Dihydroxypropionsäure, Polyolaldehyd, Polyolketon, Polyolcarbonsäure, Aceton, Propionaldehyd, Propansäure, Butyraldehyd, Butansäure, Butanon, Hydrochinon, 1,2-Dihydroxybenzol, 2,5-Cyclohexadien-1-on, Benzochinon, Maleinsäure, Benzaldehyd, Benzoesäure, Acrolein, und/oder Acrylsäure beinhaltet.

6. Verfahren nach Anspruch 1, wobei das erste Erzeugnis Kohlenmonoxid, Ameisensäure, Formaldehyd, Methanol, Oxalat, Oxalsäure, Glyoxylsäure, Glykolsäure, Glyoxal, Glykolaldehyd, Ethylenglykol, Essigsäure, Acetaldehyd, Ethanol, Ethylen, Methan, Ethan, Milchsäure, Propansäure, Aceton, Isopropanol, 1-Propanol, 1,2-Propylenglykol, Propan, 1-Butanol, und/oder 2-Butanol beinhaltet.

7. Verfahren nach Anspruch 1, wobei die Kathode und die Anode durch eine ionendurchlässige Barriere getrennt sind.

8. Verfahren nach Anspruch 7, wobei die ionendurchlässige Barriere eine ionendurchlässige Barriere auf Polymer- oder anorganischer Keramikbasis beinhaltet.

9. Verfahren nach Anspruch 7, wobei die ionendurchlässige Barriere Folgendes umfasst:
- ein festes Polymerleiterelektrolytmaterial und eine Membran auf perfluorierter Sulfonsäurebasis, und/oder
- eine Natrium supraleitende Keramik der lonenleiterart oder Keramiken auf Zirkonium-Yttriumoxid- und Beta-Aluminiumoxid-Basis.

10. Verfahren nach Anspruch 1, 3 und 5-9, das Folgendes umfasst:
- Empfangen einer Zufuhr von Kohlendioxid und Methanol in dem ersten Bereich der elektrochemischen Zelle;
- Inberührungbringen des ersten Bereichs mit einem Katholyten, der Kohlendioxid und Methanol umfasst;
- Empfangen einer Zufuhr von Methanol in dem zweiten Bereich der elektrochemischen Zelle; und
- Inberührungbringen des zweiten Bereichs mit einem Anolyten, der Methanol umfasst.

## Revendications

1. Procédé de production d'un premier produit à partir d'une première région d'une cellule électrochimique ayant une cathode et d'un second produit provenant d'une seconde région de la cellule électrochimique comportant une anode, le procédé comprenant les étapes consistant à :
- contacter la première région avec un catholyte comprenant du dioxyde de carbone ;
- contacter la seconde région avec un anolyte acide, l'anolyte comprenant un alcool ;
- appliquer un potentiel électrique suffisant entre l'anode et la cathode pour produire le premier produit récupérable dans la première région et le second produit récupérable dans la seconde région ; et
- extraire le premier produit de la première région et extraire le second produit de la seconde région, le second produit extrait étant présenté à travers un port pour un stockage et/ou une consommation ultérieurs par d'autres dispositifs et/ou processus,
l'anode comportant un revêtement électrocatalytique sur un substrat métallique de soupape,
le revêtement électrocatalytique étant choisi dans le groupe constitué par les oxydes de ruthénium et les oxydes d'iridium, et le platine et l'or ainsi que leurs combinaisons sous forme de métaux et d'oxydes,
le substrat métallique de soupape comportant du titane, du tantale, du zirconium ou du niobium, et
le second produit comportant un aldéhyde et/ou un acide carboxylique.

2. Procédé selon la revendication 1, la cathode comportant du bismuth.

3. Procédé selon la revendication 1, l'anolyte étant exempt d'ions halogénure.

4. Procédé selon la revendication 1, l'alcool comportant du méthanol, et/ou de l'éthanol, et/ou de l'éthylène glycol, et/ou du glycérol, et/ou du 1-propanol, et/ou du 2-propanol, et/ou du phénol, et/ou du 1-butanol, et/ou du 2-butanol, et/ou de l'isopropanol, et/ou de l'alcool benzylique, et/ou de l'alcool allylique, et/ou un glycol et/ou un polyol.

5. Procédé selon la revendication 1, le second produit comportant du formaldéhyde, et/ou de l'acide formique, et/ou de l'acétaldéhyde, et/ou de l'acide acétique, et/ou du glycolaldéhyde, et/ou du glyoxal, et/ou de l'acide glycolique, et/ou de l'acide glyoxylique, et/ou de l'acide oxalique, et/ou du glycéraldéhyde, et/ou de la dihydroxyacétone, et/ou de l'acide 2,3 dihydroxypropionique, et/ou du polyol-aldéhyde, et/ou du polyol-cétone, et/ou de l'acide polyol-carboxylique, et/ou de l'acétone, et/ou du propionaldéhyde, et/ou de l'acide propanoïque, et/ou du butyraldéhyde, et/ou de l'acide butanoïque, et/ou de la butanone, et/ou de l'hydroquinone, et/ou du 1,2-dihydroxybenzène, et/ou du 2,5-cyclohexadiène-1-one, et/ou de la benzoquinone, et/ou de l'acide maléique, et/ou du benzaldéhyde, et/ou de l'acide benzoïque, et/ou de l'acroléine et/ou de l'acide acrylique.

6. Procédé selon la revendication 1, le premier produit comportant du monoxyde de carbone, et/ou de l'acide formique, et/ou du formaldéhyde, et/ou du méthanol, et/ou de l'oxalate, et/ou de l'acide oxalique, et/ou de l'acide glyoxylique, et/ou de l'acide glycolique, et/ou du glyoxal, et/ou du glycolaldéhyde, et/ou de l'éthylène glycol, et/ou de l'acide acétique, et/ou de l'acétaldéhyde, et/ou de l'éthanol, et/ou de l'éthylène, et/ou du méthane, et/ou de l'éthane, et/ou de l'acide lactique, et/ou de l'acide propanoïque, et/ou de l'acétone, et/ou de l'isopropanol, et/ou du 1-propanol, et/ou du 1,2-propylène glycol, et/ou du propane, et/ou du 1-butanol et/ou du 2-butanol.

7. Procédé selon la revendication 1, la cathode et l'anode étant séparées par une barrière perméable aux ions.

8. Procédé selon la revendication 7, la barrière perméable aux ions comportant l'une parmi une barrière perméable aux ions à base de céramique polymère ou inorganique.

9. Procédé selon la revendication 7, la barrière perméable aux ions comportant :
- un matériau électrolyte conducteur polymère solide et une membrane à base d'acide sulfonique perfluorée, et/ou
- une céramique de type conducteur ionique supraconducteur de sodium, ou une céramique à base de zirconium-yttria et de bêta-alumine.

10. Procédé selon les revendications 1, 3 et 5 à 9 comprenant :
- la réception d'une charge de dioxyde de carbone et de méthanol au niveau de la première région de la cellule électrochimique ;
- la mise en contact de la première région avec un catholyte comprenant du dioxyde de carbone et du méthanol ;
- la réception d'une alimentation en méthanol au niveau de la seconde région de la cellule électrochimique ; et
- la mise en contact de la seconde région avec un anolyte comprenant du méthanol.
